# FASCICULE DE BREVET EUROPEEN

(11) **EP 3 292 973 B1**
(45) Date de publication et mention de la délivrance du brevet: **07.06.2023**
(21) Numéro de dépôt: 17187350.8
(22) Date de dépôt: 22.08.2017
(51) Int. Cl.: B29C 44/04, B29C 44/12, B29C 44/42, B29D 99/00, B29L 31/00

(54) **RÉALISATION D'UNE GARNITURE EN MOUSSE POUR ÉLÉMENT DE SIÈGE POUR VÉHICULE AUTOMOBILE**
HERSTELLUNG EINER SCHAUMSTOFFGARNITUR FÜR SITZELEMENT EINES KRAFTFAHRZEUGS
PRODUCTION OF A FOAM INSERT FOR A MOTOR VEHICLE SEAT ELEMENT

(30) Priorité: 09.09.2016 FR 1658440
(43) Date de publication de la demande: 14.03.2018
(73) Titulaire: FAURECIA Sièges d'Automobile, 92000 Nanterre (FR)
(72) Inventeur: MAUFFREY, Jean-Marie, 90300 VALDORE (FR); PARRAIN, Quentin, 70200 FRENCHEVELLE (FR); BOQUET, Mathieu, 91370 VERRIERES LE BUISSON (FR)
(74) Mandataire: Cabinet Beaumont

(56) Documents cités:
- EP-A2- 0 135 771
- DE-A1-102010 033 627
- DE-U1- 20 014 059
- FR-A1- 2 814 110
- US-A1- 2014 132 054
- US-B1- 6 180 035

## Description

### Domaine

La présente description concerne de façon générale les sièges pour véhicules automobiles et, plus particulièrement, la réalisation d'une garniture en mousse d'un élément de siège.

### Etat de l'art antérieur

De plus en plus souvent, on cherche à réaliser des éléments de siège en mousse complexes, que ce soit pour y intégrer des dispositifs ou équipements variés ou pour avoir des mousses de densités différentes.

Une intégration d'un objet dans une mousse injectée d'une seule pièce peut poser problème. En effet, classiquement l'objet ne peut pas être placé dans le moule avant injection de la mousse car, lors de l'injection, de la mousse pourrait atteindre des parties du dispositif et entraver son fonctionnement ultérieur. C'est le cas par exemple si l'on souhaite intégrer un textile tridimensionnel afin d'obtenir un effet de ventilation. La mousse injectée va avoir tendance à venir boucher les alvéoles du textile 3D.

Dans le cas d'une réalisation d'un élément de siège avec des mousses de différentes densités, il est difficile de définir la frontière entre les deux mousses à partir du moment où elles sont injectées en même temps dans le même moule.

Le document DE 200 14 059 U1 divulgue un procédé selon le préambule de la revendication 1.

### Résumé

Un mode de réalisation vise à proposer un procédé de réalisation d'une garniture d'un élément de siège par injection de mousse qui pallie tout ou partie des inconvénients des procédés usuels.

Un mode de réalisation propose une solution particulièrement adaptée à la réalisation d'une garniture en mousses de densités différentes.

Un mode de réalisation propose une solution particulièrement adaptée à l'intégration d'un dispositif dans la garniture.

Ainsi, un mode de réalisation prévoit un procédé selon la revendication 1.

Selon un mode de réalisation, le film est en un mélange de polyéthylène et d'amidon.

Selon un mode de réalisation qui ne fait pas partie de l'invention, le film sépare la zone d'injection de mousse d'un objet.

Selon un mode de réalisation qui ne fait pas partie de l'invention, l'objet est une couche de textile 3D.

Selon l'invention, le film délimite la première zone d'injection d'au moins une deuxième zone d'injection de mousse dans le moule.

Selon un mode de réalisation, les zones d'injection de mousse sont destinées à des mousses de densités différentes.

Selon un mode de réalisation, une coiffe est placée dans le fond du moule avant injection.

Un mode de réalisation prévoit une garniture d'élément de siège, obtenue par la mise en oeuvre du procédé ci-dessus.

Un mode de réalisation prévoit un élément de siège pour véhicule automobile comportant au moins une garniture.

Un mode de réalisation prévoit un siège pour véhicule automobile comportant au moins un élément de siège.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation schématique d'un mode de réalisation d'une étape d'injection de mousse, dans un moule, adapté pour une injection de mousses de densités différentes ;
la figure 2 est une représentation schématique et en coupe de la garniture obtenue ;
la figure 3 est une représentation schématique d'un mode de réalisation d'une étape d'injection de mousse, dans un moule, avec intégration d'une couche de textile tridimensionnel ; et
la figure 4 est une vue en perspective éclatée d'un mode de réalisation d'un élément de siège avec couche de textile tridimensionnel.

### Description détaillée

Par souci de clarté, seuls les étapes et éléments utiles à la compréhension des modes de réalisation qui vont être décrits ont été représentés et seront détaillés. En particulier, la réalisation des autres éléments du siège et notamment de l'armature et de la coiffe n'a pas été détaillée, les modes de réalisation décrits étant compatibles avec les réalisations usuelles de tels éléments.

Il est à noter que, sur les figures, les éléments structurels et/ou fonctionnels communs aux différents modes de réalisation peuvent présenter les mêmes références et peuvent disposer de propriétés structurelles, dimensionnelles et matérielles identiques.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, il est sauf précision contraire fait référence à l'orientation des figures ou à un siège dans sa position normale d'utilisation. Sauf précision contraire, les expressions approximativement, sensiblement et, de l'ordre de, signifient à 10 % près, de préférence à 5 % près.

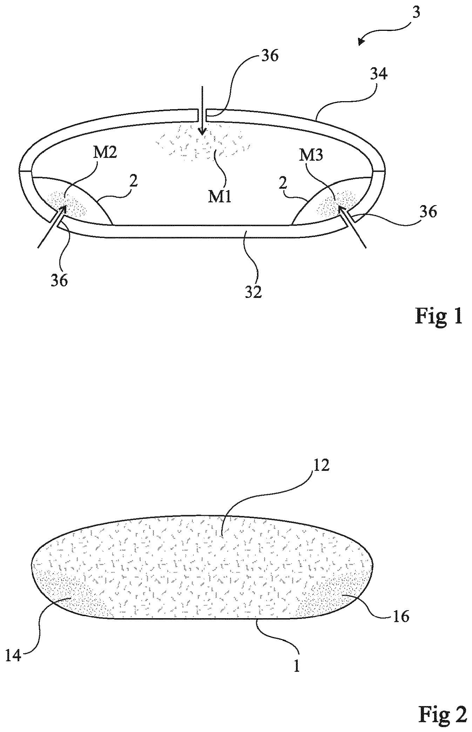

La figure 1 est une représentation schématique d'un mode de réalisation d'une étape d'injection de mousse, dans un moule, adapté pour une injection de mousses de densités différentes. On utilise la terminologie "injecter" mais on comprendra que lorsque l'on se réfère à injecter, cela comprend également des techniques de pulvérisation de mousse, et autres techniques de réalisation de mousse.

Selon ce mode de réalisation, on souhaite réaliser trois zones de mousse ayant des densités différentes. Il s'agit d'un exemple arbitraire et d'autres configurations pourront être prévues.

On utilise un moule 3 d'injection de mousses sous la forme, par exemple de deux coques 32 et 34, définissant la forme de la garniture et refermées l'une sur l'autre avant injection. Le moule 3 n'est en lui-même pas modifié par la mise en oeuvre des modes de réalisation décrits. Pour injecter trois mousses M1, M2 et M3 de densités différentes, le moule 3 dispose d'au moins trois buses 36 d'injection disposées au niveau des zones correspondantes.

Dans une réalisation classique, les mousses sont injectées en même temps ou avec un léger décalage en fonction des zones. Une difficulté est que les interfaces entre les zones sont difficiles à définir clairement et de façon reproductible. Ce problème est particulièrement présent au niveau des bords du moule, donc de la garniture.

Selon le mode de réalisation représenté en figure 1, on prévoit de disposer, dans le moule avant l'injection des mousses M1, M2 et M3, une ou plusieurs pièces 2 de film plastique afin de définir une frontière entre les mousses lors de l'injection. La présence du film évite que les mousses se mélangent lors de l'injection.

Le matériau du film 2 est choisi d'une part pour être étanche à la mousse lors de l'injection mais également pour se dégrader lors de la polymérisation des mousses.

Il s'agit, par exemple, d'un film à base de polyéthylène et d'amidon qui a la particularité de disparaître lors de la polymérisation de la mousse ou, plus précisément, de s'intégrer à la mousse.

A défaut d'utiliser un film se dégradant lors de la polymérisation, les zones de mousses resteraient séparées et n'adhèreraient pas entre-elles.

La figure 2 est une représentation schématique et en coupe de la garniture obtenue. Comme l'illustre cette figure, on se trouve en présence d'un élément 1 de siège ayant trois zones 12, 14 et 16 de mousses de densités différentes. Les zones sont parfaitement définies grâce au film 2 qui était présent au moulage. Toutefois, les mousses sont également jointes à leur interface grâce à la disparition du film 2 lors de la polymérisation.

Le cas échéant, un matériau de revêtement en textile tissé ou non, en peau ou en matière synthétique est disposé, avant injection de la mousse, au fond du moule 3 pour réaliser directement la coiffe autour de la garniture.

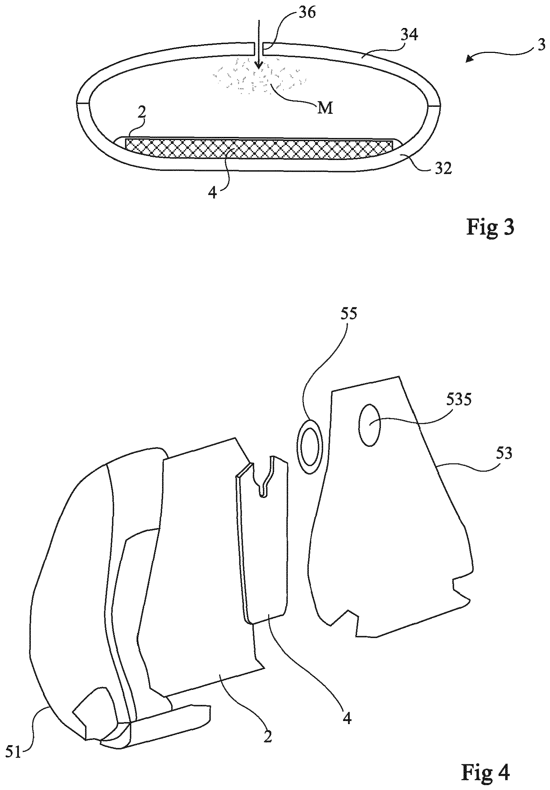

Les figures 3 et 4 illustrent une autre application de l'utilisation d'un film de séparation lors du moulage. Selon cet exemple, on souhaite intégrer, dans une face de la garniture, un objet, par exemple un textile 3D pour servir de zones de ventilation (chauffage ou refroidissement) de l'élément de siège.

La figure 3 est une représentation schématique d'un mode de réalisation d'une étape d'injection de mousse, dans un moule, avec intégration d'une couche de textile tridimensionnel.

Dans une réalisation classique, on est contraint d'utiliser des couches de thermoformage afin de fixer le textile tridimensionnel à la garniture. Cela complique la fabrication.

Selon le mode de réalisation illustré par la figure 3, une couche 4 de textile tridimensionnel est placée au fond d'une des coques 32 d'un moule 3 d'injection de mousse. Puis, le textile 3D est protégé par un film 2 avant d'injecter la mousse M.

Lors de l'injection de la mousse, par exemple par une buse 36, la mousse est retenue par le film 2, ce qui évite d'obturer les alvéoles du textile 3D.

Selon un mode de réalisation, le film 2 est en plastique, par exemple en polyuréthane, en polyéthylène à basse densité linéaire (PEBDL ou LLDPE - Linear Low-density PolyEthylene), en polyéthylène basse densité (PEBD). Selon ce mode de réalisation, ce film 2 subsiste une fois l'élément terminé.

Selon un autre mode de réalisation préféré, le film 2 est, comme dans la réalisation des figures 1 et 2, en un matériau se dégradant une fois la mousse polymérisée. Le fait que le film 2 disparaisse favorise les échanges d'air entre le textile 3D et la couche de mousse.

La figure 4 est une vue en perspective éclatée d'un élément de siège, par exemple un dossier, équipé à l'arrière d'un textile tridimensionnel pour créer une circulation d'air dans le dossier.

On suppose le cas où le film plastique 2 subsiste en fin de fabrication. On se trouve donc en présence d'une couche de mousse 51 à l'avant du dossier. L'arrière de la couche 51 est séparée de la couche 4 de textile 3D par le film 2. L'arrière de la couche 4 est recouvert d'une protection, par exemple un molleton 53. De préférence, on prévoit, dans la couche 53, une ouverture 535 de réception d'une grille 55 de ventilation communicant avec le textile 3D.

Un avantage est qu'il est désormais possible de réaliser un élément de siège d'une seule pièce par injection de mousse y compris en intégrant un dispositif à l'intérieur. La fabrication est considérablement simplifiée.

Divers modes de réalisation ont été décrits. Diverses variantes et modifications apparaîtront à l'homme de l'art. En particulier, la réalisation de la mousse elle-même n'a pas été exposée, les modes de réalisation décrits étant, en eux-mêmes compatibles avec les réalisations usuelles. De plus, la mise en oeuvre pratique des modes de réalisation décrits est à la portée de l'homme du métier à partir des indications fonctionnelles données ci-dessus, que ce soit pour les techniques de moulage ou de choix du matériau formant le film.

## Revendications

1. Procédé de réalisation d'une garniture d'élément de siège en mousse comportant les étapes suivantes :
insérer, à l'intérieur d'un moule d'injection (3), un film plastique (2) délimitant une première zone d'injection de la mousse d'au moins une deuxième zone d'injection de mousse dans le moule ;
injecter de la mousse afin de réaliser la garniture (1) d'une seule pièce, **caractérisé en ce que** le film disparaît avec la polymérisation de la mousse.

2. Procédé selon la revendication 1, dans lequel le film (2) est en un mélange de polyéthylène et d'amidon.

3. Procédé selon la revendication 1 ou 2, dans lequel les zones d'injection de mousse sont destinées à des mousses de densités différentes.

4. Procédé selon l'une quelconque des revendications 1 à 3, dans lequel une coiffe est placée dans le fond du moule (3) avant injection.

5. Garniture d'élément de siège, obtenue par la mise en oeuvre du procédé selon l'une quelconque des revendications 1 à 4.

6. Elément de siège pour véhicule automobile comportant au moins une garniture selon la revendication 5.

7. Siège pour véhicule automobile comportant au moins un élément de siège selon la revendication 6.

## Patentansprüche

1. Verfahren zum Formen der Polsterung eines Schaumstoff-Sitzelements, das die folgenden Schritte aufweist:
Einsetzen einer Kunststofffolie (2) in eine Spritzgussform (3), die mindestens einen ersten Schaumeinspritzbereich von einem zweiten Schaumeinspritzbereich in der Form abgrenzt;
Einspritzen von Schaum, um die Polsterung (1) in einem Stück zu bilden, **dadurch gekennzeichnet, dass** die Folie mit der Polymerisation des Schaums verschwindet.

2. Verfahren nach Anspruch 1, wobei die Folie (2) aus einem Gemisch aus Polyethylen und Stärke hergestellt ist.

3. Verfahren nach Anspruch 1 oder 2, wobei die Schaumeinspritzbereiche für Schäume mit unterschiedlichen Dichten vorgesehen sind.

4. Verfahren nach einem der Ansprüche 1 bis 3, wobei vor dem Einspritzen eine Abdeckung am Boden der Form (3) platziert wird.

5. Polsterung für ein Sitzelement, erhalten durch die Durchführung des Verfahrens nach einem der Ansprüche 1 bis 4.

6. Kraftfahrzeugsitzelement, das wenigstens ein Polsterelement nach Anspruch 5 aufweist.

7. Kraftfahrzeugsitz, aufweisend wenigstens ein Sitzelement nach Anspruch 6.

## Claims

1. A method of forming upholstery of a foam seat element comprising the steps of:
inserting, into an injection mold (3), a plastic film (2) delimiting at least one first foam injection area from a second foam injection area in the mold;
injecting foam to form the upholstery (1) in one piece, **characterized in that** the film disappears with the polymerization of the foam.

2. The method of claim 1, wherein the film (2) is made of a mixture of polyethylene and of starch.

3. The method of claim 1 or 2, wherein the foam injection areas are intended for foams having different densities.

4. The method of any of claims 1 to 3, wherein a cover is placed at the bottom of the mold (3) before the injection.

5. Upholstery for a seat element, obtained by the implementation of the method of any of claims 1 to 4.

6. A motor vehicle seat element comprising at least one piece of upholstery of claim 5.

7. A motor vehicle seat comprising at least one seat element of claim 6.
